# EUROPEAN PATENT APPLICATION

(11) **EP 2 618 095 A2**
(43) Date of publication of application: **24.07.2013**
(21) Application number: 13386003.1
(22) Date of filing: 18.01.2013
(51) Int. Cl.: F41B 7/04

(54) **Piston-operated speargun with rubber bands**

(30) Priority: 18.01.2012 GR 2012100035
(71) Applicant: Katapotis, Michail, Fthiotidos (GR)
(72) Inventor: Katapotis, Michail, Fthiotidos (GR)

(57) **Abstract**

Piston-Operated Speargun with Rubber Bands (4), which carries a Rubber-Band Assembly (2), consisting of the Rubbers, a Piston-Head and a Sealing Part, which is located inside and fixed onto a cylindrical cavity at the interior of the Main Body of the Speargun (3), which acts like a piston barrel (3.1), creating a Sealed Compartment of Variable Length. The Handle (4.1) is connected onto the same end of the Main Body (4.2) where the Rubber-Band Assembly (4.3) is also fixed. The Muzzle of the speargun (4.4), which is connected onto the other end of the Main Body, keeps the mouth of the cylinder open (4.4.1); it has pulleys (4.4.2) through which the two ropes attached onto the Piston-Head transfer the resultant force of the Rebound Forces of the Rubber Band (Fr) to the side of the speargun where the Shaft-Arrow (4.5) is located. Inside the Sealed Compartment of Variable Length, no hydrostatic forces are applied onto the surface of the Rubber Band regardless of the depth at which the speargun is used. Moreover, during fishing, water enters the cylinder through its open mouth. Hydrostatic pressure is thus applied onto the Piston-Head, creating forces, the result of which (Fh), is co-directional to the resultant force of the Rebound Forces of the Rubber Band (Fr) while its magnitude increases as the depth, at which the speargun is used, increases, thus increasing its effective range.

## Description

The invention concerns a speargun with rubber bands.

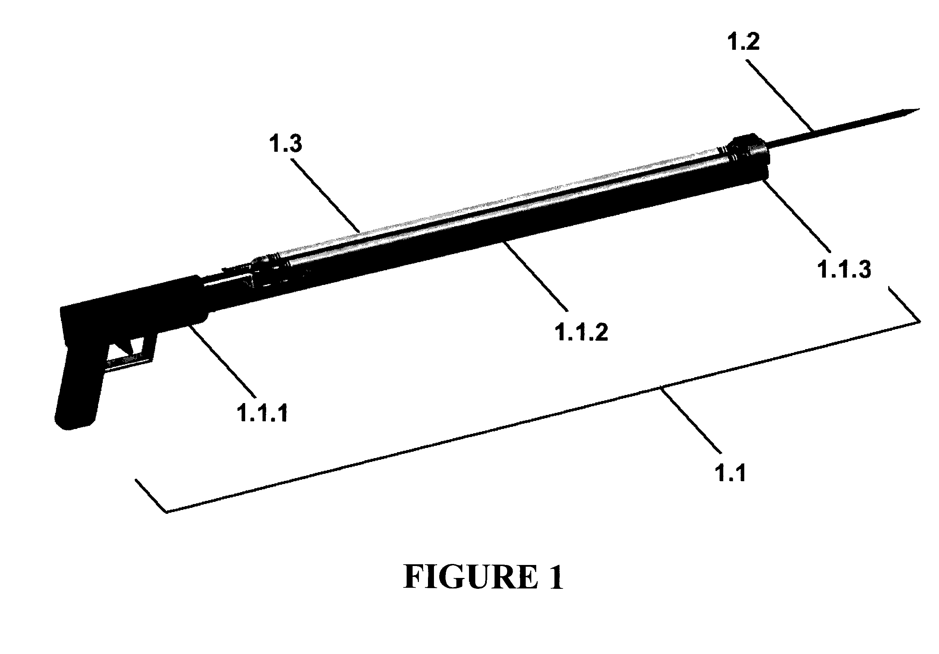

Today all spearguns with rubber-bands (Figure 1), regardless of their particular design and mode of manufacture, consist of the Speargun-Body Assembly (1.1), comprising the Handle (1.1.1), the Main Body (1.1.2) and the Muzzle (1.1.3); on the Speargun-Body Assembly, a Shaft-Arrow (1.2) and Rubber Bands (1.3) are mounted. The Rubber Bands, when stretched with the aid of the user's muscular power and locked on the Shaft-Arrow, they can launch said Shaft-Arrow. From now on, the spearguns such as those described above will be referred to as "Conventional Spearguns with Rubber Bands".

It has been proven in practice that the effective range of Conventional Spearguns with Rubber Bands drops as the depth at which they are used increases. This is due to the hydrostatic pressure applied on the Rubber Bands by the surrounding water. To be more specific, the result force of the hydrostatic forces applied on the surface of the stretched Rubber-bands counteracts to the result force of the intra and inter-molecular forces which return the Rubber-bands to their original position during the shot to accelerate the Shaft-Arrow (from now on, these forces will be referred to as "Rebound Forces"). As the depth at which a Conventional Speargun with Rubber Bands is used increases, the corresponding increase in the hydrostatic pressure leads to a reduction of the magnitude of the result force causing the stretched Rubber Bands to return to their initial position and, therefore, in a reduction of the velocity at which the Shaft-Arrow is launched and, therefore, of the effective range of the speargun.

The present invention creates a Piston-Operated Speargun with Rubber bands, whose advantage compared to Conventional Spearguns with Rubber bands with identical effective range near the water surface, is that the effective range of the Piston-Operated Speargun with Rubber bands increases as the depth at which it is used increases.

According to the present invention, this is achieved by incorporating the rubber-bands into an assembly, connecting their one free-end onto a Piston Head and the other onto a Sealing Part and by positioning the assembly Piston-Head/Rubber-bands/Sealing-Part (from now onwards this assembly will be referred to as the "Rubber-Band Assembly") inside a cylindrical cavity at the interior of the Main Body of the speargun which acts like a Piston Barrel; the Sealing Part seals the one end of the cavity, fixing at the same time the Rubber-Band Assembly onto the Main Body of the Speargun thus creating a sealed compartment of variable length, wherein the movement of the Rubber-bands is transferred to the Shaft-Arrow through the Piston-Head and a system of pulleys and ropes.

According to the present invention, as described below, in the Piston-Operated Speargun with Rubber Bands, the result of the hydrostatic forces becomes co-directional to the result of the Rebound Forces of the Rubber bands. To be more specific, the air pressure inside the sealed compartment, originally equal to the atmospheric pressure, is reduced when the Rubber Bands are stretched by the user because of the increase of the compartment's volume. As long as the Rubber Bands remain stretched, the volume and therefore the pressure of the air enclosed inside the sealed cavity remain constant regardless of the depth at which the Piston-Operated Speargun with Rubber Bands is brought; as a result, there are no hydrostatic forces applied onto the surface of the Rubber bands as is the case with Conventional Spearguns with Rubber Bands. Instead, hydrostatic pressure is applied onto the outside of the Piston Head, creating a pressure difference at the two sides of the Piston Head, resulting in the development of a force which is co-directional to the force applied onto the Piston Head by the Rubber Bands. As the depth at which the Piston-Operated Speargun with Rubber Bands is used increases, hydrostatic pressure increases, therefore increasing the magnitude of the result force applied on the Piston-Head during the return of the Rubber bands to their initial position and, through a system of ropes and pulleys, the force applied onto the Shaft-Arrow, resulting in an increase of the effective range of the speargun.

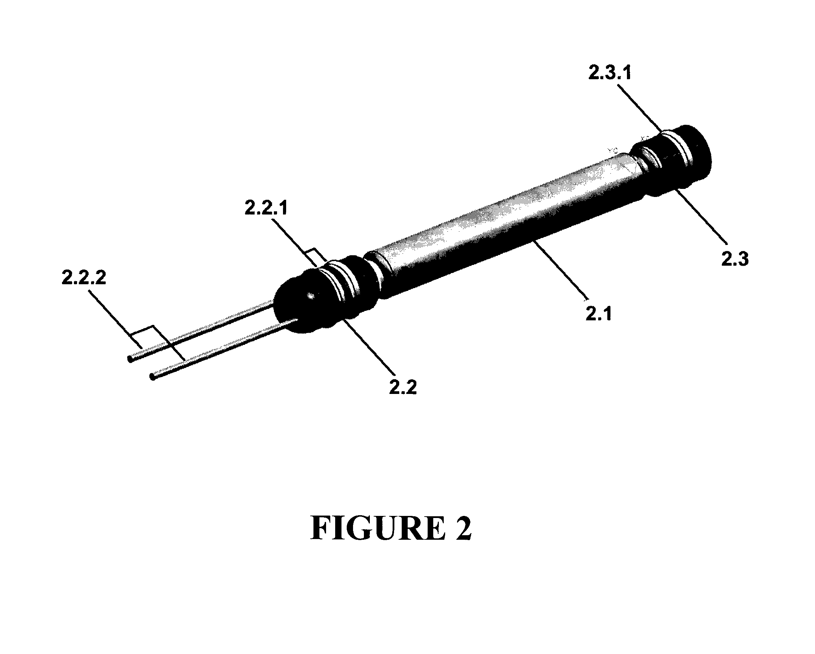

The Piston-Operated Speargun with Rubber Bands, according to the present invention, is disclosed and described using an example of embodiment wherein the Main Body of the Speargun is a cylindrical barrel, and the Rubber-Band Assembly at its interior has a single Rubber band, as presented in Figures 2, 3 and 4.

Figure 2 discloses, according to the present invention, the Rubber-Band Assembly of the Piston-Operated Speargun with Rubber Bands **characterized in that** it consists of a Rubber Band (2.1); assembled on its two ends are a Piston-Head (2.2) and a Sealing Part (2.3). The Piston-Head bears Seals (2.2.1); connected symmetrically onto the Piston-Head are the ends of two ropes of the necessary diameter, strength and length, to hold the stretched Rubber Band (2.2.2). The Sealing Part has a Seal (2.3.1) and can also fix the Rubber-Band Assembly onto the Main Body of the Speargun.

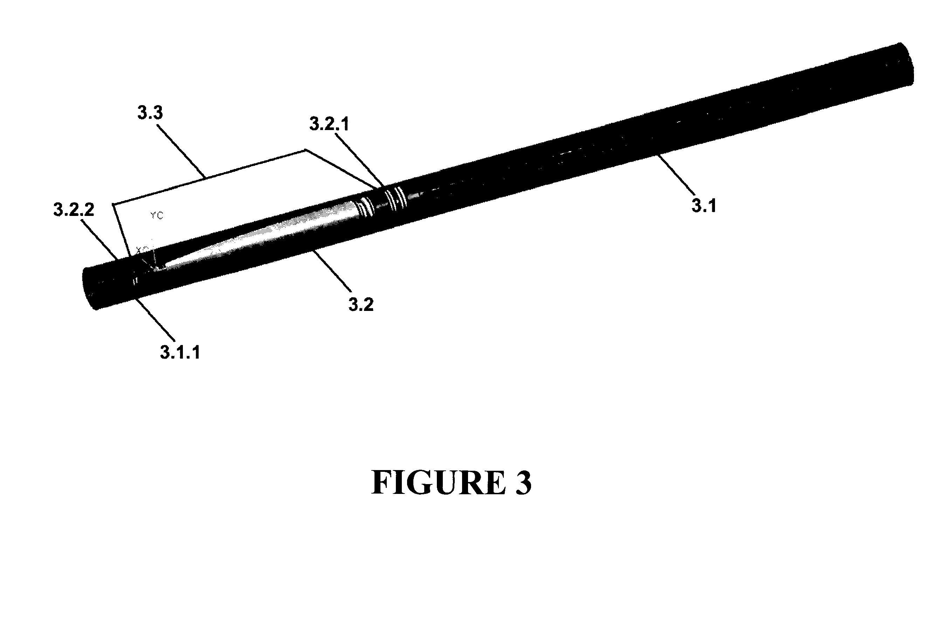

Figure 3 discloses, according to the present invention, the Main Body of the Piston-Operatd Speargun with Rubber Bands **characterized in that** it has an internal cylindrical cavity, which acts like a piston barrel (3.1). Located inside the cylindrical cavity is the Rubber-Band Assembly (3.2), which is fixed on one end of the cavity (3.1.1), creating between Seals (3.2.1) and (3.2.2), located on the Piston Head and the Sealing Part respectively, a Sealed Compartment of Variable Length (3.3). When the Rubber Band is not stretched, the Sealed Compartment of Variable Length has minimum length whereas when the speargun is loaded (stretched Rubber Band) it has maximum length. Inside the Sealed Compartment of Variable Length, no hydrostatic forces are applied onto the surface of the Rubber Band regardless of the depth at which the speargun is used.

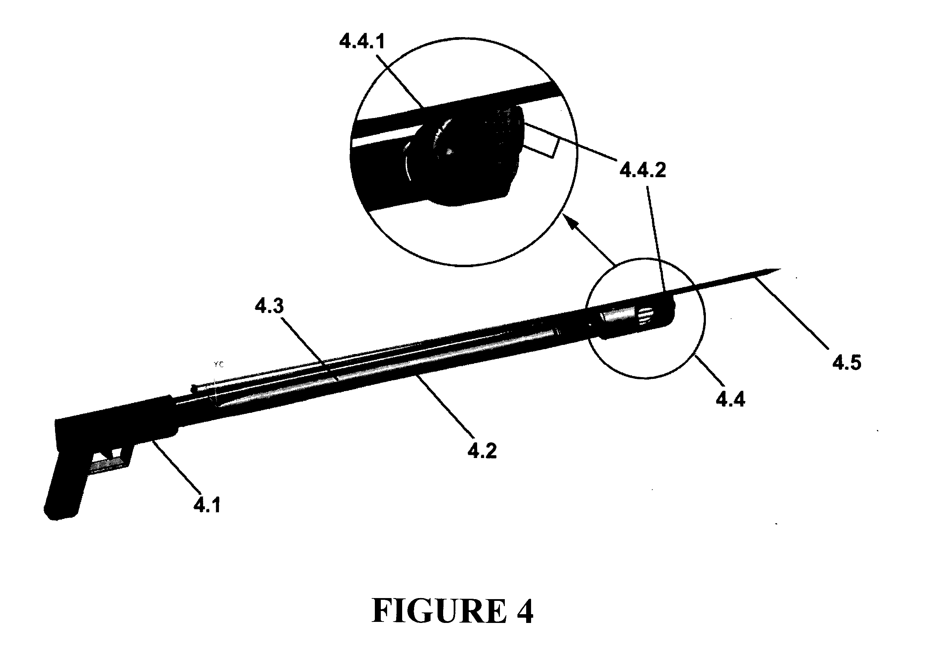

Figure 4 discloses, according to the present invention, the Pison-Operated Speargun with Rubber Bands when it is loaded, that is when the Rubber Band is stretched. The Handle (4.1) is connected onto the same end of the Main Body (4.2) where the Rubber-Band Assembly (4.3) is also fixed. The Muzzle of the speargun (4.4), which is connected onto the other end of the Main Body, keeps the mouth of the cylinder open (4.4.1); it has pulleys (4.4.2) through which the two ropes attached onto the Piston-Head transfer the resultant force of the Rebound Forces of the Rubber Band (Fr) to the side of the speargun where the Shaft-Arrow (4.5) is located. During fishing, water enters the cylinder through its open mouth. Hydrostatic pressure is thus applied onto the Piston-Head, creating forces, the result of which (Fh), is co-directional to the resultant force of the Rebound Forces of the Rubber Band (Fr) while its magnitude increases as the depth, at which the speargun is used, increases.

## Claims

1. Piston-Operated Speargun with Rubber Bands, **characterized in that** it has a Rubber-Band Assemby (2), comprising a Rubber Band (2.1), on the two ends of which, a Piston Head (2.2) and a Sealing Part (2.3) are connected, and **in that** said Piston-Head has Seals (2.2.1) and two ropes of the necessary diameter, strength and length, to hold the stretched Rubber Band (2.2.2); and **in that** the Sealing Part has a Seal (2.3.1) and that said Sealing Part can fix the Rubber-Band Assembly onto the Main Body of the Speargun; and **in that** the Main Body of the Speargun (3) has an internal cylindrical cavity, which acts like a piston barrel (3.1); and **in that** inside said cylindrical cavity is located the Rubber-Band Assembly (3.2), which is fixed on one end of the cavity (3.1.1), creating between Seals (3.2.1) and (3.2.2), located on the Piston Head and the Sealing Part respectively, a Sealed Compartment of Variable Length (3.3); and **in that** the Handle (4.1) is connected onto the same end of the Main Body (4.2) where the Rubber-Band Assembly (4.3) is also fixed; and **in that** the Muzzle of the Speargun (4.4) which is connected onto the other end of the Main Body, keeps the mouth of the cylinder open (4.4.1) and has pulleys (4.4.2) through which the two ropes attached onto the Piston-Head transfer the resultant force of the Rebound Forces of the Rubber Band (Fr) to the side of the speargun where the Shaft-Arrow (4.5) is located.

2. Piston-Operated Speargun with Rubber Bands, according to Claim 1, **characterized in that** the Rubber-Band Assembly comprises more than one Rubber Bands.

3. Piston-Operated Speargun with Rubber Bands, according to Claim 1, **characterized in that** the Main Body of the Speargun consists of more than one cylinders; and the fact that a Rubber-Band Assembly is located inside each cylinder; and the fact that a rope of appropriate diameter, strength and length to stretch the Rubber band is connected on the Piston-Head of each Rubber-Band Assembly.
